(19)

**Europäisches Patentamt**

**European Patent Office**

**Office européen des brevets**

(11) **EP 4 152 050 A1**

(12) **EUROPEAN PATENT APPLICATION**

(43) Date of publication:
**22.03.2023 Bulletin 2023/12**

(21) Application number: **21197459.7**

(22) Date of filing: **17.09.2021**

(51) International Patent Classification (IPC):
*G01S 13/42* (2006.01)      *G01S 13/58* (2006.01)
*G01S 7/41* (2006.01)      *G01S 13/931* (2020.01)

(52) Cooperative Patent Classification (CPC):
**G01S 13/42; G01S 7/417; G01S 13/582;**
**G01S 13/584; G01S 13/931**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Aptiv Technologies Limited**
**St. Michael (BB)**

(72) Inventors:
• **LABUSCH, Sven**
  **50737 Köln (DE)**
• **BRAUN, Marco**
  **40225 Düsseldorf (DE)**

(74) Representative: **Manitz Finsterwald**
**Patent- und Rechtsanwaltspartnerschaft mbB**
**Martin-Greif-Strasse 1**
**80336 München (DE)**

(54) **COMPUTER IMPLEMENTED METHOD, COMPUTER SYSTEM AND COMPUTER READABLE MEDIUM FOR OBJECT DETECTION**

(57)      Computer implemented method for object detection, comprising obtaining 3D data, the 3D data comprising of range data, angle data and doppler data, processing a deep learning algorithm on the 3D data to obtain processed 3D data and obtaining processed 2D data from the processed 3D data, the processed 2D data comprising of range data and angle data.

**EP 4 152 050 A1**

**Description**

FIELD

The present disclosure relates to a computer implemented method, computer system and computer readable medium for object detection.

BACKGROUND

Over years, radar sensors have been widely used in the automotive industry to support advanced driver assistance systems. In a wide range of areas like camera processing, lidar signal processing or natural language processing deep neural networks have emerged to be the state of the art algorithms.

After a 2D fast Fourier transformations (FFT) radar data is typically a 3D cube with the dimensions range, Doppler and (virtual) receiving antennas. In this cube usually targets or interesting regions are identified by applying a constant false alarm rate (CFAR) which results in a 3D cube which is sparse in range and Doppler. The antenna vectors of a range Doppler cell are called beamvectors. In classical radar signal processing a subset of these beamvectors are used to perform an angle finding which results in a sparse two- or three-dimensional point cloud having features like a Doppler value or the radar cross section which is a measure of how strong a target can reflect the radar signal in relation to its area visible by the radar.

In comparison to other sensors, radars usually have a weaker angular resolution. But instead, the radar technology can measure the Doppler, i.e. the radial speed component, quite accurate. Therefore, the 3D cube has often a quite large number of Doppler bins to separate objects not based on their angles, but on their radial velocity.

Consequently, there is a need to provide an improved computer implemented method, computer system and computer readable medium for object detection.

SUMMARY

The present disclosure provides a computer implemented method, a computer system and a non-transitory computer readable medium according to the independent claims. Embodiments are given in the subclaims, the description and the drawings.

In one aspect, the present disclosure is directed at a computer implemented method for object detection. Therein, the method comprises obtaining 3D data, the 3D data comprising of range data, angle data and doppler data. The method further comprises processing a deep learning algorithm on the 3D data to obtain processed 3D data. The method further comprises obtaining processed 2D data from the processed 3D data, the processed 2D data comprising of range data and angle data.

In a first step, 3D data is obtained. This can take place by accessing a suitable radar device being adapted to obtain or detect such 3D data. The 3D data comprise of the three dimensions, the first data being related to range data or the range dimension, the second data being related to angle data or the angle dimension and the third data being related to doppler data or the doppler dimension. The angle dimension can also be named azimuth dimension and the doppler dimension can also be named velocity dimension. This 3D data contains the information in the vicinity of a radar device, in particular in a driveway of a vehicle using the radar device.

The first dimension can also be abbreviated as R, the second dimension as A and the third dimension as D, thus, the 3D data can be named based on the three dimensions as RAD data. This 3D data can also be named a 3D cube or RAD cube.

In a further step, the 3D data are processed by a deep learning algorithm and thereby obtaining processed 2D data from the 3D data. The processed 2D data comprise of range data or dimension and angle data or dimension, or RA data. In particular, the processed 2D data comprise a grid of RA data.

This grid of RA data may then be used to be processed for an object detection algorithm, a (cartesian) semantic segmentator or as stand-alone output in a vehicle.

According to an embodiment, the method further comprises decomposing the 3D data into three sets of 2D data. Therein, a first set of 2D data comprises range data and angle data, a second set of 2D data comprises range data and doppler data and a third set of 2D Data comprises angle data and doppler data. Therein, the processing a deep learning algorithm on the 3D data comprises processing the first set of 2D data, the second set of 2D data and the third set of 2D data individually.

The decomposition of the 3D data is typically performed before the step of processing the 3D data through a deep learning algorithm. The decomposition is performed to obtain three different 2D sets of data. The first set of 2D data comprises range data and angle data, i.e. RA data. The second set of 2D data comprises range data and doppler data, i.e. RD data. The third set of 2D data comprises angle data and doppler data, i.e. AD data.

The processing of the 3D data according to this embodiment comprises processing the first set of 2D data, the second set of 2D data and the third set of 2D data and in particular processing the first, second and third set individually through a deep learning algorithm.

According to an embodiment, the step of processing of the first set of 2D data comprises processing a compression algorithm.

According to an embodiment, the step of processing of the first set of 2D data and/or of the second set of 2D data and/or the third set of 2D data comprises processing a convolution algorithm.

According to an embodiment, the step of processing of the first set of 2D data comprises processing a dropout algorithm.

According to an embodiment, the step of processing the deep learning algorithm on the 3D data comprises processing a position encoding algorithm on the second set of 2D data and the third set of 2D data.

According to an embodiment, the step of processing the deep learning algorithm on the 3D data further comprises aligning the first set of 2D data, the second set of 2D data and the third set of 2D data in the first set of 2D data.

According to an embodiment, the step of processing the deep learning algorithm on the 3D data further comprises aligning the first set of 2D data, the second set of 2D data and the third set of 2D data in the first set of 2D data by applying a cross-attention algorithm attending from the first set of 2D data on the second set of 2D data and on the third set of 2D data.

According to an embodiment, the step of processing the deep learning algorithm on the 3D data further comprises processing a convolution algorithm.

According to an embodiment, the step of obtaining the 3D data comprises obtaining range data, obtaining antenna data and obtaining doppler data. Therein, the method further comprises processing one or both of a Fourier transformation algorithm and a dense layer algorithm and processing an Abs algorithm.

According to an embodiment, the step of processing the deep learning algorithm on the 3D data further comprises processing a convolution algorithm on the range data, the angle data and the doppler data. The processing of the convolution algorithm on the range data, the angle data and the doppler data may in particular be processed together.

According to an embodiment, the step of processing the deep learning algorithm on the 3D data further comprises processing a convolution algorithm on the angle data and the doppler data. In particular, in this embodiment, the processing of a convolution algorithm may be processed exclusively on the angle data and the doppler data.

According to an embodiment, the step of processing the deep learning algorithm on the 3D data further comprises processing a convolution algorithm on the range data and the angle data. In particular, in this embodiment, the processing of a convolution algorithm may be processed exclusively on the range data and the angle data.

According to an embodiment, the step of processing the deep learning algorithm on the 3D data further comprises processing an upsample algorithm.

In another aspect, the present disclosure is directed at a computer system, said computer system being configured to carry out several or all steps of the computer implemented method described herein.

The computer system may comprise a processing unit, at least one memory unit and at least one non-transitory data storage. The non-transitory data storage and/or the memory unit may comprise a computer program for instructing the computer to perform several or all steps or aspects of the computer implemented method described herein.

In another aspect, the present disclosure is directed at a non-transitory computer readable medium comprising instructions for carrying out several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an inter-net connection. The computer readable medium may, for example, be an online data repository or a cloud storage.

The present disclosure is also directed at a computer program for instructing a computer to perform several or all steps or aspects of the computer implemented method described herein.

DRAWINGS

Exemplary embodiments and functions of the present disclosure are described herein in conjunction with the following drawings, showing schematically in:

Fig. 1    a view of an embodiment of a computer system according to the present disclosure;

Fig. 2    a flow chart of an embodiment of a method according to the present disclosure as being carried out by the computer system of Fig. 1;

Fig. 3    a more detailed flow chart of an embodiment of a method according to Fig. 2;

Fig. 4    a part of a method according to Fig. 3;

Fig. 5    another part of a method according to Fig. 3;

Fig. 6    a more detailed flow chart of another embodiment of a method according to Fig. 2; and

Fig. 7    another more detailed flow chart of another embodiment of a method according to Fig. 6.

DETAILED DESCRIPTION

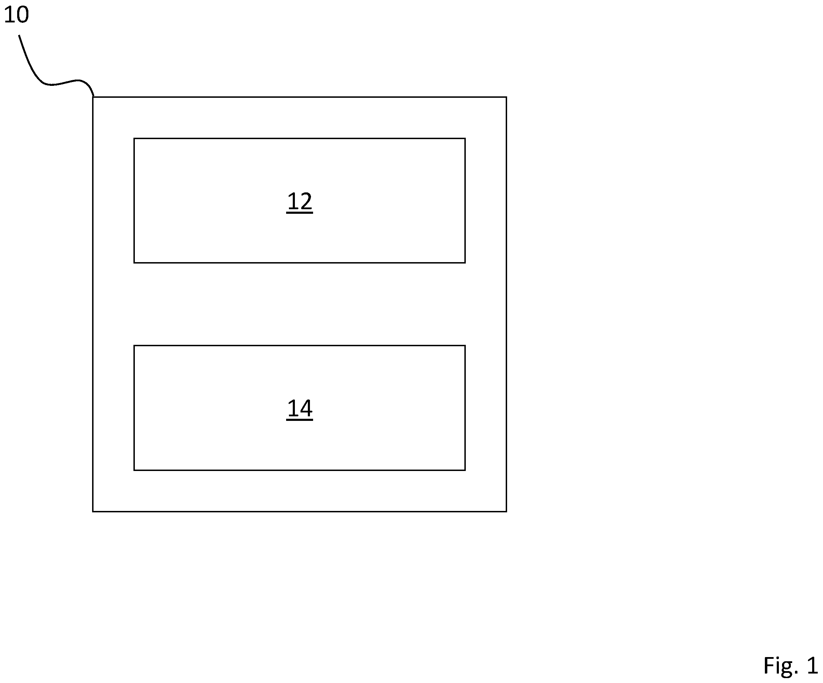

Fig. 1 depicts a view of an embodiment of a computer system 10 according to the present disclosure. Therein, the computer system 10 comprises a radar device 12, which may also be named a radar sensor, and a processing device 14, which may also be named a processor. The computer system 10 may in particular be embedded into a vehicle (not shown).

The computer system 10 is in particular adapted to carry out a computer implemented method for object detection. Therein, the radar device 12 is adapted to obtain 3D data, the 3D data comprising of range data, angle data and doppler data. The processing device 14 is adapted to process a deep learning algorithm on the 3D data to obtain processed 3D and to obtain processed 2D data from the processed 3D data, the processed 2D data comprising of range data and angle data.

The processing device 12 may be further adapted to decompose the 3D data into three sets of 2D data, a first set of 2D data comprising range data and angle data, a second set of 2D data comprising range data and doppler data and a third set of 2D data comprising angle data and doppler data. Therein, processing a deep learning algorithm on the 3D data comprises processing the first set of 2D data, the second set of 2D data and the third set of 2D data individually.

The processing of the first set of 2D data may comprise processing a compression algorithm.

The processing of the first set of 2D data and/or of the second set of 2D data and/or the third set of 2D data may also comprise processing a convolution algorithm.

The processing of the first set of 2D data may also comprise processing a dropout algorithm.

Processing the deep learning algorithm on the 3D data may also comprise processing a position encoding algorithm on the second set of 2D data and the third set of 2D data.

Processing the deep learning algorithm on the 3D data may further comprise aligning the first set of 2D data, the second set of 2D data and the third set of 2D data in the first set of 2D data.

Processing the deep learning algorithm on the 3D data may further comprise aligning the first set of 2D data, the second set of 2D data and the third set of 2D data in the first set of 2D data by applying a cross-attention algorithm attending from the first set of 2D data on the second set of 2D data and on the third set of 2D data.

Processing the deep learning algorithm on the 3D data may further comprise processing a convolution algorithm.

Obtaining the 3D data may also comprise obtaining of range data, obtaining of antenna data and obtaining of doppler data. Therein, the processing device 14 may be further adapted to process one or more of a Fourier transformation algorithm, a dense layer algorithm and an Abs algorithm.

Processing the deep learning algorithm on the 3D data may further comprise processing a convolution algorithm on the angle data, the angle data and the doppler data

Processing the deep learning algorithm on the 3D data may further comprise processing a convolution algorithm on the angle data and the doppler data.

Processing the deep learning algorithm on the 3D data may also further comprise processing a convolution algorithm on the range data and the angle data.

Processing the deep learning algorithm on the 3D data may further comprise processing an upsample algorithm.

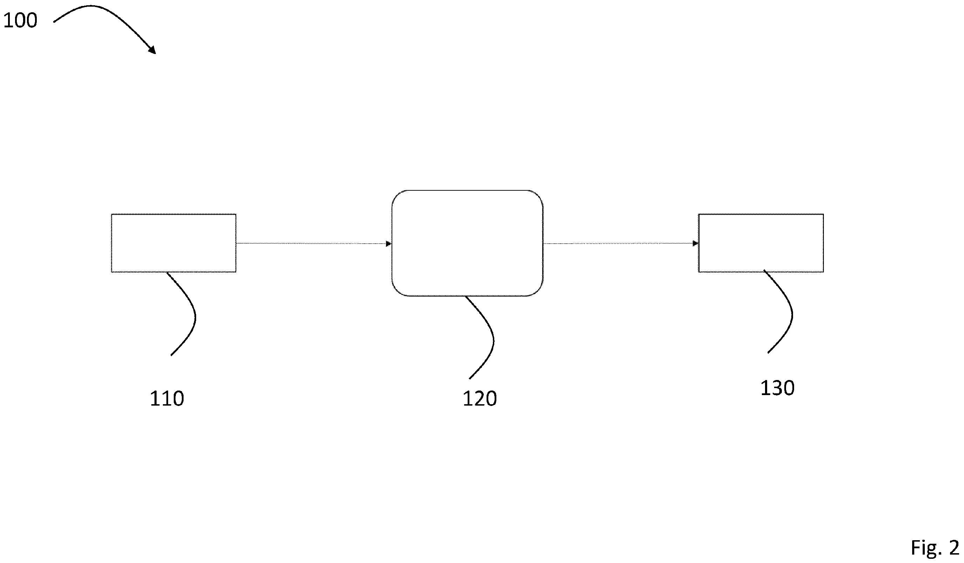

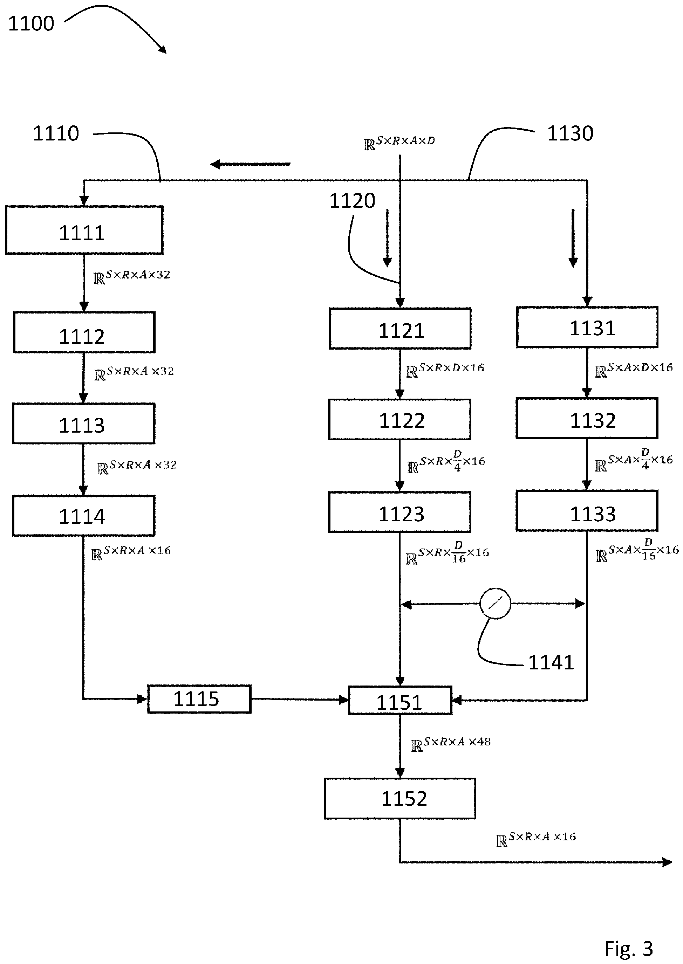

Fig. 2 depicts a flow chart of an embodiment of a method 100 according to the present disclosure. The method 100 comprises in a first step 110 obtaining 3D data, the 3D data comprising of range data, angle data and doppler data. The method 100 comprises in a second step 120 processing a deep learning algorithm on the 3D data to obtain processed 3D data. The method 100 comprises in a further step 130 obtaining processed 2D data from the processed 3D data, the processed 2D data comprising of range data and angle data. Aspects of the method 100 will be described in more detail in line with Figs. 3 to 5.

Fig. 3 depicts more detailed flow chart of an embodiment of a method 1100 according to the present disclosure. The method 1100 comprises of three different method or processing paths, 1110, 1120 and 1130. In a first step, not shown in this flow chart of Fig. 3, a 3D data is obtained. The 3D data comprises of range data R, angle data A and doppler data D, thus representing an RAD cube.

In a second step, also not shown in this flow chart of Fig. 3, the 3D data is decomposed into three sets of 2D data, a first set of 2D data comprising range data and angle data, a second set of 2D data comprising range data and doppler data and a third set of 2D Data comprising angle data and doppler data. Those three sets of 2D data are represented by the three processing paths 1110, 1120 and 1130. In particular, the input to the three paths is denominated by the amount of radar sensors S, the amount of range data bins R, the amount of angle data bins A and the amount of doppler data bins D, i.e. $\mathbb{R}^{SxRxAxD}$.

The three sets of 2D data is then processed individually along the three paths 1110, 1120 and 1130 through a deep learning algorithm to obtain processed 2D data from the processed 3D data, the processed 2D data comprising of range data and angle data.

Therein, the first path 1110 is directed to the processing of the first set of 2D data, i.e. the RA data, the second path 1120 is directed to the processing of the second set of 2D data, i.e. the RD data and the third path 1130 data is directed to the processing of the third set of 2D data, i.e. the AD data.

In another step not shown in the method 1100 in Fig. 3, this input $\mathbb{R}^{SxRxAxD}$ is transposed so that the doppler dimension is defined as the feature dimension in the RA path 1110, the angle dimension is defined in the RD path 1120 and the range dimension is defined as the feature dimension in the AD path 1130. The first layers of each path are thus utilized to separately map the energy from the initial RAD cube to a latent feature representation in RA, RD and AD.

Going along the first path 1110, the RA data are in a first step 1111 initially processed with a compression algorithm, in particular, a RA doppler compression algorithm.

In the furthers steps 1112, 1113 and 1114 along the first path 1110, the RA data are processed with three convolutions sequentially.

Similarly, in the steps 1121, 1122 and 1123 along the second path 1120, the RD data are processed with three convolutions sequentially. However, in contrast to the first path, the convolution algorithm in the steps 1122 and 1123 are performed with an additional stride of, for example, 4, to compress D while maintaining the spatial resolution in R.

Similarly, in the steps 1131, 1132 and 1133 along the third path 1130, the AD data are processed with three convolutions sequentially. In alignment with the second path 1120, the convolution algorithm in the steps 1132 and 1133 are performed with an additional stride of, for example, 4, to compress D while maintaining the spatial resolution in A.

The convolutions along the paths 1110, 1120 and 1130 are applied to extract spatially local correlations in each of the three paths 1110, 1120 and 1130 in parallel. All of the convolution algorithms may be processed with or without mirrored padding, which reflects features of each plane at its edges.

In the first path 1110, as a further step 1115, a dropout algorithm is processed. In particular, by randomly setting all values in RA to 0 with a probability of p during training, the network is forced to rely on returns from RD and AD paths, which increases the overall robustness of the algorithm.

In a further step 1141 in parallel to the second path 1120 and the third path 1130, a position encoding algorithm is processed and appended to both paths individually. This is performed by linear interpolation between 0 and 1 along all remaining doppler bins and concatenation of this value in feature dimension for RA and AD.

In a further step 1151, the three paths 1110, 1120 and 1130 are aligned in the range-angle plane, i.e. in RA. This is performed by calculating the mean of features along the doppler entries of the same spatial dimension range and angle in RD and AD, respectively, resulting in tensors $R^{RD}$ of the shape range x (number of features) and $A^{AD}$ of shape angles x (number of features). In particular, to align or concatenate all three paths 1110, 1120 and 1130 in the range-angle plane, i.e. RA, $R^{RD}$ and $A^{AD}$ are repeated along the missing dimensions angle and range, respectively, resulting in $RA^{RD}$ and $RA^{AD}$.

In a last step 1152, a further convolution algorithm is processed to extract patterns within the aligned tensors RA, $RA^{RD}$ and $RA^{AD}$.

Optionally, and in particular alternatively in step 1151, it is possible to map from RD to RA and AD to RA by attending each doppler bin in AD and RD from RA of the same spatial dimension angle and range so that a dynamic weighting of the entries along doppler dimensions can be performed.

For this purpose, the number of output features of step 1114 will be increased by len_query and the number of output features of step 1123 and 1133 will both be increased by len_key. The initial amount of output features is here defined as len_values. The input to this alternative is therefore composed as follows:

|   | first path | second path | third path |
|---|---|---|---|
| V | len_values$^{RA}$ | len_values$^{RD}$ | len_values$^{AD}$ |
| Q | len_query$^{RA}$ |  |  |
| K |  | len_key$^{RD}$ | len_key$^{AD}$ |

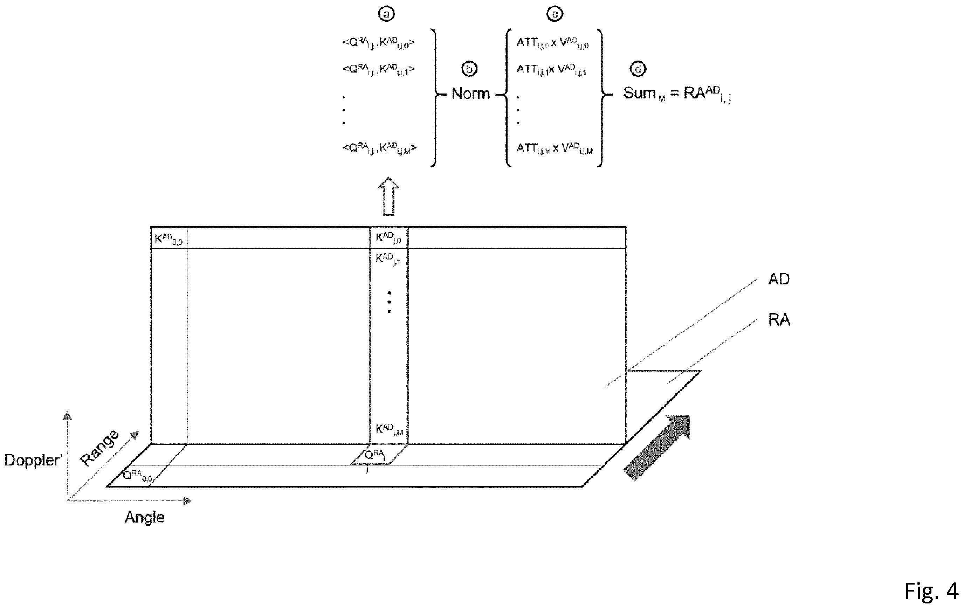

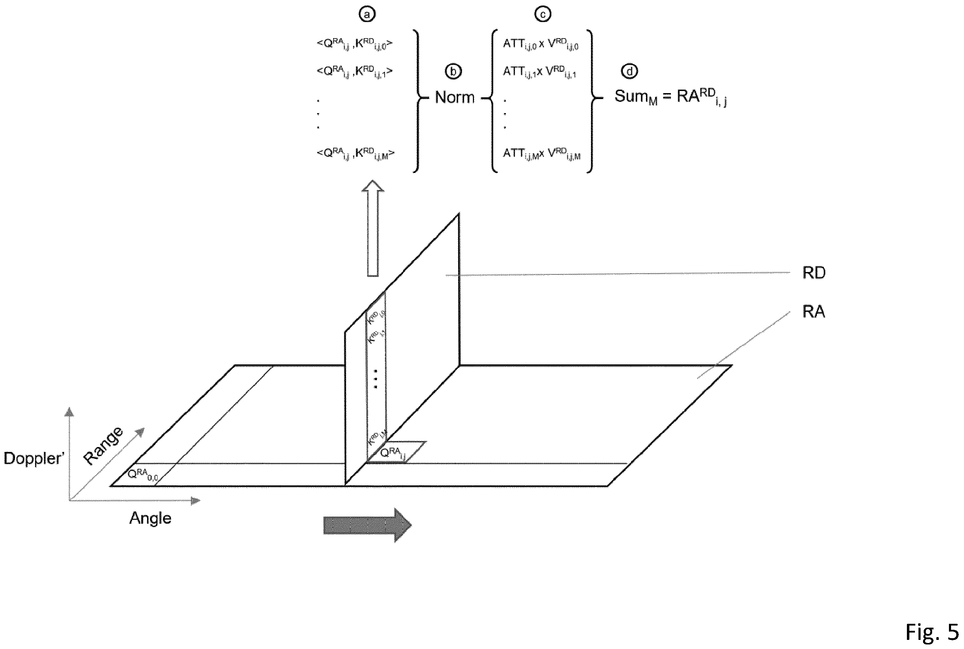

This is shown in further detail in Fig. 4 and 5, which state the process of attending and compressing values in each doppler bin along the same spatial dimensions for both RD and AD planes: First, a positional encoding is added along the doppler dimension in both $V^{RD}$ and $V^{AD}$. Therefore, an array along the doppler dimension is linearly interpolated between 0 and 1 and concatenated to the feature dimensions in $V^{RD}$ and $V^{AD}$.

Then, each V, K pair of RD is repeated along the angular dimension of length I, resulting in $K^{RD*}$, $V^{RD*}$ and each V, K pair of AD is repeated along the range dimension of length J resulting in $K^{AD*}$, $V^{AD*}$. In the next step, for every position i, j, the dot product between the query in RA, $Q^{RA}_{i,j}$, and $K^{AD*}_{i,j}$ as well as $Q^{RA}_{i,j}$ and $K^{RD*}_{i,j}$ is calculated (a in Fig. 4 and 5). Resulting entries are normalized, potentially by some exponential function

$$X_{Norm} = \frac{A^{x_m}}{\sum_{m=0}^{M} A^{x_m}}$$

for A indicating some generic value, e.g. e or 2, to avoid negative values, resulting in $ATT^{RD}$ and $ATT^{AD}$ so that

for M defining the length of the doppler dimension in second and third path. Finally, the features in $V^{RD*}$ and $V^{AD*}$ are element-wise multiplied by $ATT^{RD}$ and $AT\text{-}T^{AD}$ (c), respectively, and summed over along the doppler dimension (d) for each position i,j:

$$RA_{i,j}^{RD} = \sum_{m=0}^{M} V_{i,j,m}^{RD*} * ATT_{i,j,m}^{RD} \quad \text{and} \quad RA_{i,j}^{AD} = \sum_{m=0}^{M} V_{i,j,m}^{AD*} * ATT_{i,j,m}^{AD}$$

The resulting tensors RA, $RA^{AD}$ and $RD^{RD}$ are then concatenated in feature dimension and processed by an alignment convolution.

In particular, through the embodiment as shown in Fig. 3, a learned 2D Convolution is applied to map energy in the RAD cube to latent representations in each of RA, RD, AD planes.

In contrast to previously known approaches, which are utilizing 3D Convolutions that are costly in terms of processing time for processing the three planes, the present embodiment effectively processes RA, RD and AD planes by solely utilizing 2D Convolutions and is therefore more suitable for application on embedded systems.

Further, by randomly setting all values in RA to 0 during training with probability p, the network is forced to rely on returns from RD and AD paths. This dropout is not applied during inference.

Additionally, by attending on RD and AD by queries calculated from RA, as described in line with Figs 4 and 5, the doppler dimension in RD and AD can be dynamically compressed. While entries along the doppler dimension for a given spatial position range and angle in RD and AD are initially compressed by an equal weighting of each cell in the Doppler dimension (by calculating the mean), this weighting can be conducted by calculating queries in RA and keys in RD and AD. Features in RD and AD are then mapped to RA depending on how well the keys in RD and AD match the query in RA (defined by calculating the dot product between queries and keys followed by a normalization along the doppler dimension for a given entry in range-angle).

Furthermore, by appending a positional encoding along the Doppler dimension before attention followed by compression, the radial velocity information in the resulting maps in $RA^{AD}$ and $RD^{RD}$ is maintained. As a result, the algorithm is able to dynamically attend from RA to RD and AD.

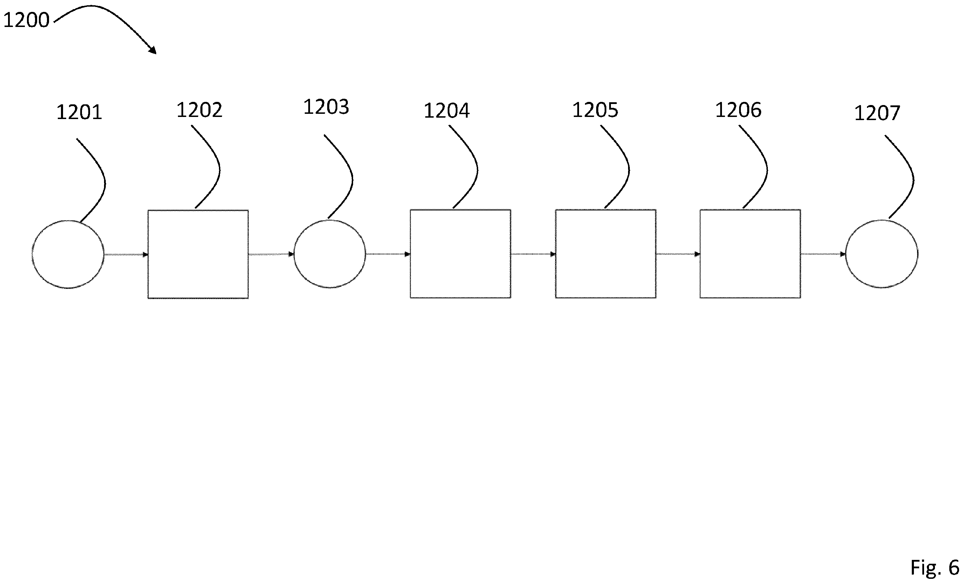

Fig. 6 depicts a more detailed flow chart of another embodiment of a method 1200 according to the present disclosure.

Therein, in a first step 1201, a 3D data is obtained. Therein, obtaining the 3D data comprises obtaining range data, antenna data and obtaining doppler data. The 3D data thus comprises of range data R, antenna data a and doppler data D, thus representing an RaD cube.

In a next step 1202, the RaD cube is processed with either one of a Fourier transformation algorithm, in particular a discrete Fourier transformation, further in particular a small discrete Fourier transformation, and a dense layer algorithm. In case of a Fourier transformation, the RaD cube is transformed into a RD cube with complex frequencies instead of antennas. In case of a dense layer algorithm, the RaD cube results in an abstract version of it. The processing of these algorithms either does not increase the number of output bins or only slightly increases the number of output bins.

The data is then processed with an Abs or absolute number algorithm. By processing an Abs algorithm, an angle is achieved and by thus the capacity is reduced by factor of 2. This results in obtaining the RAD cube in step 1203, wherein the 3D data comprises of range data R, angle data A and doppler data D.

In a further step 1204, the RAD cube is processed with a convolution algorithm. In particular, multiple convolutions are applied to the small RAD cube, which starts to reduce the doppler dimension in the same magnitude as the feature dimension increases. This reduction may for example be achieved by strided convolutions or max pooling. As the angle dimension is small, the size of the present RAD cube is comparable to the size of an image with a small feature dimension. This results in manageable complexities of the 3D convolutions.

In a further step 1205, a further convolution algorithm is processed. In this particular case an AD convolution is performed such that the information is transformed from the doppler domain to the angle domain. For this purpose, 2D convolutions are applied on angle and doppler domain to identify correlations. After each convolution, the angle resolution is increased by processing an upsampling algorithm. This convolution reduces the doppler dimension in the same way as the angles are increased. Instead of processing convolutions together with upsampling, it is also possible to use transposed convolutions with strides on the doppler dimension.

In any case, this step 1205 continuously refines the angles using the doppler information and further compresses the doppler at the same time. After processing this step 1205, the doppler dimension and the feature dimension are reshaped to a single dimension.

In a further step 1206, a further convolution algorithm is processed. In this particular case, an RA convolution is performed, which results in a refinement in the range-angle domain. As these two are the spatial domains, these convolutions are processed to fulfill a spatial refinement on both spatial domains together. As the doppler domain has been previously merged into the feature dimension, these convolutions are convolutions in 2D polar space.

Optionally, and depending on the original shape of the RAD cube and the desired final angular resolution, further upsampling algorithms and/or transposed convolutions can be processed on the angle dimension. The result is processed 2D data, in particular an RA grid with several features, as put out in step 1207.

Through this particular embodiment, there is neither created a bottleneck in processing, i.e. a layer with less real entries than the input or the output, nor a layer with a higher number of entries than the input and output. Therefore, this embodiment provides a solution that does not lose information and at the same time does not require an increase of capacity.

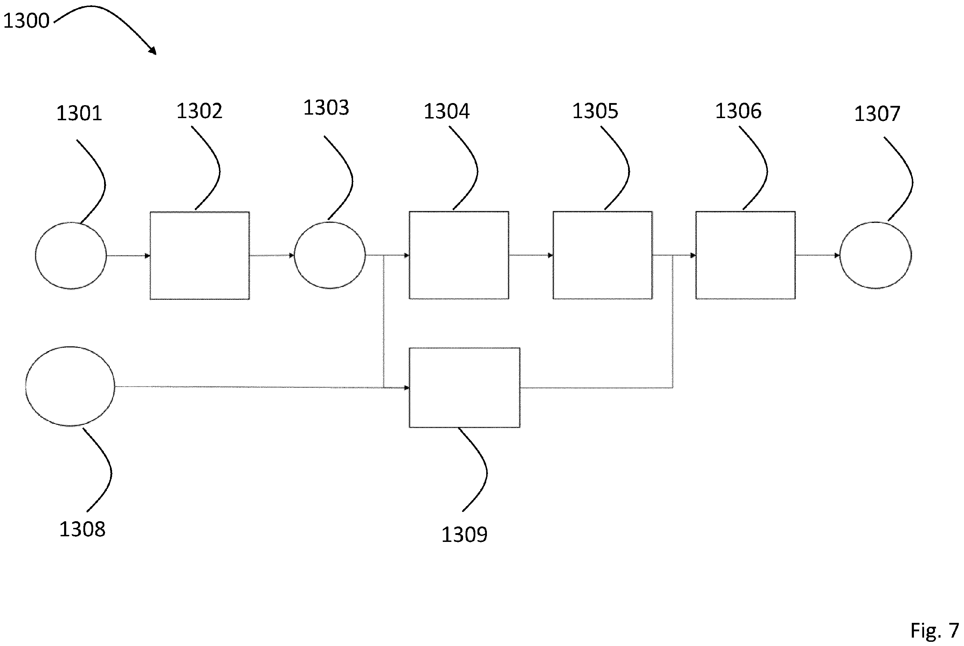

Fig. 7 depicts another more detailed flow chart of another embodiment of a method according to the present disclosure. In particular, the method as shown in Fig. 7 is based on the method as shown in Fig. 6 wherein the method steps 1301 to 1307 in Fig. 7 are the same as method steps 1201 to 1207 as described in line with Fig. 6 unless otherwise stated.

In particular, according to the embodiment as depicted in Fig. 7, ego-motion of a vehicle is considered in addition to the embodiment according to Fig. 6.

Therein, the ego-motion of the vehicle is obtained in step 1308. In a further step 1309 relative speed of stationary objects per angle bin are calculated based on the ego-motion. This information can then be fed to the step 1306, in which the RA convolution is processed.

In addition, and optionally, the RAD cube from step 1303 can be used to extract ego-motion dependent features, like, for example, extracting the bin representing zero absolute speed for stationary targets. This can further help to identify stationary targets as well as providing a more accurate relative speed propagation.

The embodiments as depicted in Figs. 6 and 7 achieve no information loss, i.e. as much information as possible as provided by the sensor is maintained, no resource wasting, i.e. higher resource consumption is avoided, an application of the doppler to refine the angle and operations are used which can be accelerated on chips, thus improving embeddability.

In particular, and in contrast to the present embodiment as depicted in Figs. 6 and 7, other solutions tend to start with an angle finding, which increases the angular resolution as a first step and results in an RAD cube, which however is much bigger than the presently used RaD cube as most of the radar sensors usually have only a few (virtual) antennas. These big RAD cubes needs to have a shallow (i.e. only very few layers, mostly just one), aggressive and therefore potentially lossy compression afterwards. But the angle finding cannot create additional information. All the information was already there in the RaD cube.

Further, the present solution as depicted in Figs. 6 and 7 does not increase the cube in that manner. Instead the idea is to keep the capacity (the number of neurons) of each layer within some range and smoothly transform it to the desired output capacity, i.e. the capacity of the final range-angle grid. Operating on this smaller cube removes the need of aggressive compressions and offers freedom to operate on two or three dimensions of the cube at the same time. It is therefore possible to define a smooth transformation from a cube with a high doppler and low angle resolution to a 2D range-angle grid with high angle resolution and just a few features.

In particular, as the RAD cube is small, it is possible to perform convolutions along multiple dimensions, even on all three dimensions together, with an additional feature dimension and the network is therefore having the possibility to transform information from one dimension to another. It is important to notice that this approach is not relying on a CFAR (constant false alarm rate) thresholded cube. It can operate on a fully filled cube where no data was removed by any kind of thresholding. Because it has a smooth change in the capacity, no aggressive compression and no bottlenecks, it has the architecture to keep all the information provided by the sensor

Further, the network has modules to operate on several dimensions at the same time, especially, it can operate on all three dimensions at the same time (RAD convolutions) and has a processing dedicated for the information transfer between the angle and the Doppler dimension (AD convolutions). This enables the network to use the doppler to refine the angle.

Lastly, the present embodiment as depicted in Figs. 6 and 7 consists of operations which can be accelerated by chips which are optimized for matrix multiplications and convolutions (Dense layers, 2D convolutions, upsamples). Even the 3D convolutions used for the RAD convolutions and AD convolutions can be rewritten as equivalent 2D group convolutions if the stride in doppler is identical to the kernel size in doppler. This makes the architecture runnable on hardware which only supports 2D convolutions and not 3D convolutions.

Reference numeral list

| | |
|---|---|
| 10 | computer system |
| 12 | radar device |
| 14 | processing device |
| 100 | method |
| 110 | method step |
| 120 | method step |
| 130 | method step |
| 1100 | method |
| 1110 | first method path |
| 1111 | method step |
| 1112 | method step |
| 1113 | method step |
| 1114 | method step |
| 1115 | method step |
| 1120 | second method path |
| 1121 | method step |
| 1122 | method step |
| 1123 | method step |
| 1130 | third method path |
| 1131 | method step |
| 1132 | method step |
| 1133 | method step |
| 1141 | method step |
| 1151 | method step |
| 1152 | method step |
| 1200 | method |
| 1201 | method step |
| 1202 | method step |
| 1203 | method step |
| 1204 | method step |
| 1205 | method step |
| 1206 | method step |
| 1207 | method step |
| 1300 | method |
| 1301 | method step |
| 1302 | method step |
| 1303 | method step |
| 1304 | method step |
| 1305 | method step |
| 1306 | method step |
| 1307 | method step |
| 1308 | method step |
| 1309 | method step |

**Claims**

1. Computer implemented method for object detection,

the method comprising:

- obtaining, by means of a radar device, 3D data, the 3D data comprising of range data, angle data and doppler data;
- processing, by means of a processing device, a deep learning algorithm on the 3D data to obtain processed 3D data; and
- obtaining, by means of the processing device, processed 2D data from the processed 3D data, the processed 2D data comprising of range data and angle data.

2. Computer implemented method according to the previous claim 1,
the method further comprising:

- decomposing, by means of the processing device, the 3D data into three sets of 2D data, a first set of 2D data comprising range data and angle data, a second set of 2D data comprising range data and doppler data and a third set of 2D data comprising angle data and doppler data;

and
wherein processing a deep learning algorithm on the 3D data comprises processing the first set of 2D data, the second set of 2D data and the third set of 2D data individually.

3. Computer implemented method according to the previous claim 2,
wherein processing of the first set of 2D data comprises processing a compression algorithm.

4. Computer implemented method according to one of the previous claims 2 or 3,
wherein processing of the first set of 2D data and/or of the second set of 2D data and/or the third set of 2D data comprises processing a convolution algorithm.

5. Computer implemented method according to one of the previous claims 2 to 4,
wherein processing of the first set of 2D data comprises processing a dropout algorithm.

6. Computer implemented method according to one of the previous claims 2 to 5,
wherein processing the deep learning algorithm on the 3D data comprises processing a position encoding algorithm on the second set of 2D data and the third set of 2D data.

7. Computer implemented method according to one of the previous claims 2 to 6,
wherein processing the deep learning algorithm on the 3D data further comprises aligning the first set of 2D data, the second set of 2D data and the third set of 2D data in the first set of 2D data.

8. Computer implemented method according to one of the previous claims 2 to 7,
wherein processing the deep learning algorithm on the 3D data further comprises aligning the first set of 2D data, the second set of 2D data and the third set of 2D data in the first set of 2D data by applying a cross-attention algorithm attending from the first set of 2D data on the second set of 2D data and on the third set of 2D data.

9. Computer implemented method according to one of the previous claims 1 to 8,
wherein processing the deep learning algorithm on the 3D data further comprises processing a convolution algorithm.

10. Computer implemented method according to one of the previous claims 1 to 9,
wherein obtaining the 3D data comprises:

- obtaining range data;
- obtaining antenna data; and
- obtaining doppler data;

and wherein the method further comprises:

- processing, by means of the processing device, one or both of a Fourier transformation algorithm and a dense layer algorithm; and
- processing, by means of the processing device, an Abs algorithm.

11. Computer implemented method according to one of the previous claims 1 to 10,
wherein processing the deep learning algorithm on the 3D data further comprises processing a convolution algorithm on the angle data and the doppler data.

12. Computer implemented method according to one of the previous claims 1 to 11,
wherein processing the deep learning algorithm on the 3D data further comprises processing a convolution algorithm on the range data and the angle data.

13. Computer implemented method according to one of the previous claims 1 to 12,
wherein processing the deep learning algorithm on the 3D data further comprises processing an upsample algorithm.

14. Computer system, the computer system being configured to carry out the computer implemented method of at least one of claims 1 to 13.

15. Non-transitory computer readable medium comprising instructions for carrying out the computer implemented method of at least one of claims 1 to 13.

Fig. 1

Fig. 2

1100

1110

$\mathbb{R}^{S \times R \times A \times D}$

1130

1120

| 1111 |
| --- |

$\mathbb{R}^{S \times R \times A \times 32}$

| 1112 |
| --- |

$\mathbb{R}^{S \times R \times A \times 32}$

| 1113 |
| --- |

$\mathbb{R}^{S \times R \times A \times 32}$

| 1114 |
| --- |

$\mathbb{R}^{S \times R \times A \times 16}$

| 1121 |
| --- |

$\mathbb{R}^{S \times R \times D \times 16}$

| 1122 |
| --- |

$\mathbb{R}^{S \times R \times \frac{D}{4} \times 16}$

| 1123 |
| --- |

$\mathbb{R}^{S \times R \times \frac{D}{16} \times 16}$

| 1131 |
| --- |

$\mathbb{R}^{S \times A \times D \times 16}$

| 1132 |
| --- |

$\mathbb{R}^{S \times A \times \frac{D}{4} \times 16}$

| 1133 |
| --- |

$\mathbb{R}^{S \times A \times \frac{D}{16} \times 16}$

1141

| 1115 |
| --- |

| 1151 |
| --- |

$\mathbb{R}^{S \times R \times A \times 48}$

| 1152 |
| --- |

$\mathbb{R}^{S \times R \times A \times 16}$

Fig. 3

Fig. 4

Fig. 5

Fig. 6

Fig. 7

Europäisches
Patentamt

European
Patent Office

Office européen
des brevets

# EUROPEAN SEARCH REPORT

**Application Number**

**EP 21 19 7459**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MAJOR BENCE ET AL: "Vehicle Detection With Automotive Radar Using Deep Learning on Range-Azimuth-Doppler Tensors", 2019 IEEE/CVF INTERNATIONAL CONFERENCE ON COMPUTER VISION WORKSHOP (ICCVW), IEEE, 27 October 2019 (2019-10-27), pages 924-932, XP033732575, DOI: 10.1109/ICCVW.2019.00121 [retrieved on 2020-03-02] * page 925, column 1; page 926, column 2; page 927, column 2; figure 3; table 1 * | 1-15 | INV. G01S13/42 G01S13/58 G01S7/41 G01S13/931 |
| X | GAO XIANGYU ET AL: "RAMP-CNN: A Novel Neural Network for Enhanced Automotive Radar Object Recognition", IEEE SENSORS JOURNAL, IEEE, USA, vol. 21, no. 4, 5 November 2020 (2020-11-05), pages 5119-5132, XP011833748, ISSN: 1530-437X, DOI: 10.1109/JSEN.2020.3036047 [retrieved on 2021-01-18] * page 5120, column 2; page 5124, column 1; figures 1, 5, 6, 8 * | 1,2,4,7, 9,11,12 | |
| X | ARTHUR OUAKNINE ET AL: "Multi-View Radar Semantic Segmentation", ARXIV.ORG, CORNELL UNIVERSITY LIBRARY, 201 OLIN LIBRARY CORNELL UNIVERSITY ITHACA, NY 14853, 30 March 2021 (2021-03-30), XP081919524, * figures 1, 2 * | 1,2,4, 11,12 | |

TECHNICAL FIELDS
SEARCHED        (IPC)

G01S

-/--

The present search report has been drawn up for all claims

| Place of search | Date of completion of the search | Examiner |
|---|---|---|
| Munich | 3 March 2022 | Kirscher, Jérôme |

EPO FORM 1503 03.82 (P04C01)

Europäisches
Patentamt

European
Patent Office

Office européen
des brevets

**EUROPEAN SEARCH REPORT**

**Application Number**

**EP 21 19 7459**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/255304 A1 (FONTIJNE DANIEL HENDRICUS FRANCISCUS [NL] ET AL) 19 August 2021 (2021-08-19) * paragraphs [0072], [0074]; figures 8, 9 * | 1 | |

TECHNICAL FIELDS
SEARCHED (IPC)

The present search report has been drawn up for all claims

| Place of search | Date of completion of the search | Examiner |
|---|---|---|
| Munich | 3 March 2022 | Kirscher, Jérôme |

EPO FORM 1503 03.82 (P04C01)

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

 

& : member of the same patent family, corresponding
  document

**EP 4 152 050 A1**

## ANNEX TO THE EUROPEAN SEARCH REPORT
## ON EUROPEAN PATENT APPLICATION NO.

EP 21 19 7459

This annex lists the patent family members relating to the patent documents cited in the above-mentioned European search report.
The members are as contained in the European Patent Office EDP file on
The European Patent Office is in no way liable for these particulars which are merely given for the purpose of information.

03-03-2022

| Patent document cited in search report | Publication date | Patent family member(s) | Publication date |
|---|---|---|---|
| US 2021255304 A1 | 19-08-2021 | CN 113167860 A | 23-07-2021 |
| | | EP 3887849 A2 | 06-10-2021 |
| | | KR 20210096607 A | 05-08-2021 |
| | | TW 202028778 A | 01-08-2020 |
| | | US 2021255304 A1 | 19-08-2021 |
| | | WO 2020113160 A2 | 04-06-2020 |

EPO FORM P0459

For more details about this annex : see Official Journal of the European Patent Office, No. 12/82

20